# EUROPÄISCHE PATENTSCHRIFT

(11) **EP 2 511 052 B1**
(45) Veröffentlichungstag und Bekanntmachung des Hinweises auf die Patenterteilung: **29.06.2016**
(21) Anmeldenummer: 12002022.7
(22) Anmeldetag: 22.03.2012
(51) Int. Cl.: B25F 5/00, F16B 45/02

(54) **Anordnung aus Arbeitsgerät und Traganordnung**
Assembly comprising work device and support assembly
Agencement constitué d'un outil de travail et d'un agencement de support

(30) Priorität: 12.04.2011 DE 102011016788
(43) Veröffentlichungstag der Anmeldung: 17.10.2012
(73) Patentinhaber: Andreas Stihl AG & Co. KG, 71336 Waiblingen (DE)
(72) Erfinder: Hoche, Florian, 71672 Marbach (DE); Häberlein, Jürgen, 71540 Murrhardt (DE); Behringer, Patrick, 73760 Ostfildern (DE)
(74) Vertreter: Reinhardt, Annette

(56) Entgegenhaltungen:
- EP-A1- 1 661 446
- DE-A1-102007 048 104
- FR-A1- 2 432 471
- FR-A3- 2 534 330
- US-A- 952 367
- US-A- 3 038 753
- US-A- 5 279 021

## Beschreibung

Die Erfindung betrifft eine Anordnung aus Arbeitsgerät und Traganordnung gemäß dem Oberbegriff des Patentanspruchs 1.

Eine derartige Anordnung geht beispielsweise aus der EP 1 661 446 A1 hervor.

Aus der DE 10 2007 048 104 A1 ist eine Anordnung aus Arbeitsgerät und Traganordnung bekannt, bei der der Traggurt mit einer Öse in einen Haken am Arbeitsgerät eingehängt wird. Die Zugangsöffnung in den Haken ist von einem Verschlussglied verschlossen, das in beide Richtungen öffnet. Dadurch ist ein einfaches Lösen des Arbeitsgeräts von der Traganordnung durch Aushängen der Öse aus dem Haken möglich.

Aus der EP 1 661 446 A1 ist ein Arbeitsgerät mit einer Traganordnung bekannt, die einen Haken umfasst, an dem das Arbeitsgerät eingehängt werden kann. Die Öffnung des Hakens ist von einem elastischen Teil verschlossen. Zum Schnellabwurf des Arbeitsgeräts ist vorgesehen, den gesamten Haken mit daran eingehängtem Arbeitsgerät von der Anordnung zu lösen.

Aus der US 5,279,021 A geht ein Halteklipp mit einem Verschlusshaken hervor.

Die US 3,038,753 A offenbart einen Haken zum Greifen einer Leine oder dgl., an dem ein weiterer Haken schwenkbar gelagert ist. Der schwenkbar gelagerte weitere Haken wird über einen Schäkel so gehalten, dass die Öffnung des Hakens durch den weiteren Haken und den Schäkel verschlossen ist.

Der Erfindung liegt die Aufgabe zugrunde, eine alternative Anordnung aus Arbeitsgerät und Traganordnung bereitzustellen.

Diese Aufgabe wird durch eine Anordnung aus Arbeitsgerät und Traganordnung mit den Merkmalen des Anspruchs 1 gelöst.

Dadurch, dass die Öse in Lösestellung des Hakens aufgrund der Gewichtskraft des Arbeitsgeräts aus dem Haken gleitet, muss der Bediener zum Lösen lediglich die Betätigungseinrichtung betätigen. Dadurch ist ein schnelles und einfaches Lösen des Arbeitsgeräts von der Traganordnung mit nur einer Hand möglich. Die Befestigungseinrichtung stellt eine Schnellabwurfeinrichtung dar, mit der das Arbeitsgerät schnell und einfach gelöst werden kann.

Vorteilhaft ist der Haken an dem Traggurt festgelegt und die Öse an dem Arbeitsgerät. Um sicherzustellen, dass die Öse aufgrund der Gewichtskraft des Arbeitsgeräts aus dem Haken gleitet, ist vorgesehen, dass die Innenkontur des Hakens, auf der die Öse aufliegt, in Lösestellung der Befestigungseinrichtung von einer Auflagestelle, auf der die Öse in Befestigungsstellung aufliegt, bis zu einer Eintrittsöffnung des Hakens abfällt. Vorteilhaft verläuft der Haken in einem gleichmäßigen Bogen, so dass ein gutes Abgleiten der Öse von dem Haken erreicht wird. Besonders vorteilhaft verläuft der Haken mindestens über einen Abschnitt spiralförmig. Mit einem spiralförmigen Verlauf wird dabei ein Verlauf bezeichnet, bei dem sich der Abstand zu einem Zentrum kontinuierlich vergrößert.

Es kann jedoch auch vorgesehen sein, dass die Öse an dem Traggurt festgelegt ist und der Haken an dem Arbeitsgerät. In diesem Fall verläuft die Innenkontur des Hakens ausgehend von der Auflagestelle, an der der Haken in Befestigungsstellung aufliegt, bis zu der Eintrittsöffnung des Hakens bezogen auf die Wirkrichtung der Schwerkraft nach oben. Dadurch kann sichergestellt werden, dass die Öse aus dem Haken gleitet, wenn die Befestigungseinrichtung in Lösestellung steht. Auch in diesem Fall ist ein gleichmäßig gebogener, insbesondere spiralförmiger Verlauf der Innenkontur des Hakens vorteilhaft.

Vorteilhaft ist der Haken in Richtung auf die Befestigungsstellung der Befestigungseinrichtung gefedert gelagert. Dadurch wird eine sichere Fixierung des Arbeitsgeräts an dem Traggurt im Betrieb gewährleistet. Zweckmäßig besitzt die Befestigungseinrichtung einen Anschlag, der die Drehlage des Hakens in Befestigungsstellung festlegt.

Eine einfache Gestaltung ergibt sich, wenn mindestens ein Abschnitt des Hakens kreisförmig ausgebildet ist und die Schwenkachse des Hakens in Befestigungsstellung auf der der Öse gegenüberliegenden Seite einer gedachten Ebene liegt, wobei die gedachte Ebene horizontal und durch den Kreismittelpunkt des durch den Abschnitt des Hakens gebildeten Kreises verläuft. Durch die exzentrische Lagerung des Hakens wird erreicht, dass die Gewichtskraft des Arbeitsgeräts dazu beiträgt, die Befestigungseinrichtung in ihrer Befestigungsstellung zu halten. Zum Lösen muss der Bediener damit auch eine gegen den Anteil der Gewichtskraft des Arbeitsgeräts wirkende Kraft aufbringen. Insbesondere verläuft der Haken in dem Bereich, in dem die Öse zwischen der Befestigungsstellung und der Lösestellung abgleitet, kreisförmig.

Der Haken stützt sich in horizontaler Richtung gegenüber dem Benutzer an einem Abstützpunkt ab. Es ist vorgesehen, dass der Abstand des Abstützpunktes zur Schwenkachse in Lösestellung größer als in Befestigungsstellung der Befestigungseinrichtung ist. Zum Lösen muss der Bediener die Schwenkachse von dem Abstützpunkt wegdrücken und dabei gegen die Gewichtskraft des Arbeitsgeräts arbeiten. Die Vergrößerung des Abstands des Abstützpunkts zur Schenkachse kann bei kreisförmiger Gestaltung des Hakens beispielsweise durch entsprechende exzentrische Anordnung der Schwenkachse erreicht werden. In einer Ausührungsform, die nicht unter den Schutzumfang des Ansprüche fällt, kann jedoch auch vorgesehen sein, dass der Abstand des Abstützpunktes zur Schwenkachse in Lösestellung kleiner als in Befestigungsstellung der Befestigungseinrichtung ist. Dadurch wird weniger Kraft zum Lösen der Befestigungseinrichtung benötigt. Der Haken stützt sich an einer Abstützplatte der Traganordnung ab.

Die Betätigungseinrichtung ist in Befestigungsstellung vorteilhaft bezogen auf die Wirkrichtung der Schwerkraft oberhalb des Hakens angeordnet. Es ist vorgesehen, dass der Haken eine Eintrittsöffnung besitzt, durch die die Öse in den Haken eingehakt werden kann. Die Eintrittsöffnung und die Betätigungseinrichtung sind vorteilhaft benachbart zueinander angeordnet. Bei betätigter Betätigungseinrichtung, also wenn die Befestigungseinrichtung in Lösestellung steht, ist die Hand des Benutzers, die die Betätigungseinrichtung betätigt, dadurch im Bereich der Eintrittsöffnung angeordnet. Dadurch kann der Benutzer das sich von der Traganordnung lösende Arbeitsgerät mit der Hand, die die Betätigungseinrichtung betätigt, auffangen.

Die Befestigungseinrichtung besitzt vorteilhaft ein Lagerelement, an dem der Haken drehbar gelagert ist. Der Haken und das Betätigungselement sind vorteilhaft fest miteinander verbunden und gegenüber dem Lagerelement beweglich gelagert. Dadurch ergibt sich ein einfacher Aufbau. Der Haken ist gegenüber dem Lagerelement vorteilhaft in Richtung auf die Befestigungsstellung gefedert. Vorteilhaft ist die Feder als Torsionsfeder, insbesondere als Schraubenfeder ausgebildet, und alle Windungen der Schraubenfeder sind in dem Betätigungselement angeordnet. Alternativ kann vorgesehen sein, dass alle Windungen der Schraubenfeder in dem Lagerelement angeordnet sind. Dadurch, dass die Windungen sich nicht über den zwischen Betätigungselement und Lagerelement gebildeten Spalt erstrecken, ist ein Verklemmen der Feder in dem Spalt auf einfache Weise vermieden.

Vorteilhaft ist der Haken so geformt und angeordnet, dass der Abstand des Hakens an der Stelle, an der die Öse aufliegt, zum Lagerelement sich beim Verschwenken der Betätigungseinrichtung von der Befestigungsstellung in die Lösestellung vergrößert oder näherungsweise gleich bleibt. Dadurch, dass sich der freie Raum zwischen Haken und Lagerelement, in dem die Öse angeordnet ist, beim Verstellen der Betätigungseinrichtung aus der Befestigungsstellung in die Lösestellung nicht verkleinert, kann auf einfache Weise ein Verhaken oder Verkanten der Öse zwischen Haken und Lagerelement vermieden werden. Der Raum, der zwischen Lagerelement und Haken für die Öse zur Verfügung steht und durch den die Öse beim Abgleiten vom Haken hindurchtritt, verengt sich beim Verschwenken der Betätigungseinrichtung nicht.

Vorteilhaft besitzt die Befestigungseinrichtung ein Sicherungselement, das fest mit dem Lagerelement verbunden ist und die Eintrittsöffnung in den Haken in Befestigungsstellung mindestens teilweise verschließt und in Lösestellung freigibt. Dadurch kann ein versehentliches Herausrutschen der Öse aus dem Haken im Betrieb sicher verhindert werden. Vorteilhaft ist das Sicherungselement elastisch, so dass die Öse entgegen der elastischen Kraft des Sicherungselements in den Haken eingehakt werden kann. Dadurch muss zum Fixieren des Arbeitsgeräts an der Traganordnung die Betätigungseinrichtung nicht betätigt werden. Das Sicherungselement ist dabei vorteilhaft mit dem Lagerelement verbunden, so dass die Eintrittsöffnung des Hakens beim Betätigen der Betätigungseinrichtung von dem Sicherungselement wegschwenkt. Vorteilhaft ist die Bewegung des Sicherungselements in mindestens einer Bewegungsrichtung von einem Anschlag begrenzt. Die Bewegung des Sicherungselements wird dabei vorteilhaft durch elastische Verformung des Sicherungselements erreicht. Der Anschlag stellt sicher, dass das Sicherungselement nicht unzulässig stark verformt werden kann. Die Befestigungseinrichtung besitzt vorteilhaft einen ersten Anschlag, der die Auslenkung des Sicherungselements ins Innere des Hakens, also beim Einhaken einer Öse in den Haken, begrenzt. Vorteilhaft ist ein zweiter Anschlag vorgesehen, der die Auslenkung des Sicherungselements nach außen, also beim Ziehen einer in den Haken eingehakten Öse gegen das Sicherungselement, begrenzt. Durch die Anschläge kann eine übermäßige Biegung des Sicherungselements, die zu einer Beschädigung des Sicherungselements führen könnte, vermieden werden. Vorteilhaft besitzt das Sicherungselement eine etwa U-förmige Gestalt, wobei die beiden Schenkel des U zweckmäßig an dem Lagerelement festgelegt sind. Vorteilhaft sind die beiden Schenkel des U einteilig mit dem Lagerelement ausgebildet.

Vorteilhaft ist zwischen Haken und Sicherungselement ein Einführbereich gebildet, der sich in Richtung auf das Hakeninnere verkleinert und vorteilhaft im Querschnitt etwa trichter- oder keilförmig zuläuft. Die Seitenwände des Trichters oder Keils können dabei gebogen verlaufen. Der Einführbereich erleichtert das Einfädeln der Öse in den Haken und leitet die Öse an die Eintrittsöffnung in den Haken. Dadurch kann auf einfache Weise eine genaue Positionierung der Öse am Haken erreicht werden. Durch die genaue Positionierung kann sichergestellt werden, dass zum Einführen der Öse in den Haken nur geringe Bedienkräfte benötigt werden.

Ausführungsbeispiele der Erfindung werden im Folgenden anhand der Zeichnung erläutert. Es zeigen:
- Fig. 1: eine schematische perspektivische Darstellung eines mit einer Traganordnung von einem Benutzer getragenen Arbeitsgeräts,
- Fig. 2: die Befestigungseinrichtung der Anordnung aus Fig. 1 in perspektivischer Darstellung in Befestigungsstellung,
- Fig. 3: die Anordnung aus Fig. 2 in Lösestellung,
- Fig. 4: eine Seitenansicht der Befestigungseinrichtung in der Stellung aus Fig. 2,
- Fig. 5: eine Seitenansicht der Befestigungseinrichtung in der Stellung aus Fig. 3,
- Fig. 6: eine Seitenansicht in Richtung des Pfeils VI in Fig. 4,
- Fig. 7: eine Seitenansicht in Richtung des Pfeils VII in Fig. 4,
- Fig. 8: eine Seitenansicht in Richtung des Pfeils VIII in Fig. 6,
- Fig. 9: eine Explosionsdarstellung der Befestigungseinrichtung,
- Fig. 10: eine Seitenansicht in Richtung des Pfeils X in Fig. 5,
- Fig. 11: eine Seitenansicht in Richtung des Pfeils XI in Fig. 5,
- Fig. 12: eine Seitenansicht in Richtung des Pfeils XII in Fig. 10,
- Fig. 13: eine perspektivische Darstellung eines Ausführungsbeispiel der Befestigungseinrichtung,
- Fig. 14: eine Seitenansicht der Befestigungseinrichtung aus Fig. 13,
- Fig. 15: eine Seitenansicht in Richtung des Pfeils XV in Fig. 14,
- Fig. 16: eine Seitenansicht in Richtung des Pfeils XVI in Fig. 15,
- Fig. 17: eine Seitenansicht in Richtung des Pfeils XVII in Fig. 15,
- Fig. 18: eine perspektivische Darstellung eines Ausführungsbeispiel der Befestigungseinrichtung in Befestigungsstellung,
- Fig. 19: eine Seitenansicht der Befestigungseinrichtung aus Fig. 18,
- Fig. 20: eine Seitenansicht in Richtung des Pfeils XX in Fig. 19,
- Fig. 21: eine Seitenansicht in Richtung des Pfeils XX in Fig. 19 in Lösestellung,
- Fig. 22: einen vergrößerten Ausschnitt aus der Seitenansicht aus Fig. 20
- Fig. 23: eine Seitenansicht in Richtung des Pfeils XXIII in Fig. 20,
- Fig. 24: eine Seitenansicht in Richtung des Pfeils XXIV in Fig. 20,
- Fig. 25: eine Seitenansicht in Richtung des Pfeils XXV in Fig. 21,
- Fig. 26: eine Explosionsdarstellung der Befestigungseinrichtung,
- Fig. 27 und 28: perspektivische Darstellungen von Betätigungseinrichtung, Haken und Feder der Befestigungseinrichtung,
- Fig. 29: eine Seitenansicht von Betätigungseinrichtung, Haken und Feder der Befestigungseinrichtung,
- Fig. 30: eine Seitenansicht in Richtung des Pfeils XXX in Fig. 29,
- Fig. 31: eine Seitenansicht in Richtung des Pfeils XXXI in Fig. 29,
- Fig. 32: eine Seitenansicht von Betätigungseinrichtung und Haken,
- Fig. 33: einen Schnitt entlang der Linie XXXIII-XXXIII in Fig. 32,
- Fig. 34: eine Seitenansicht von Betätigungseinrichtung und Haken,
- Fig. 35: eine ausschnittsweise vergrößerte Schnittdarstellung entlang der Linie XXXV-XXXV in Fig. 34,
- Fig. 36: eine vergrößerte Seitenansicht im Bereich des Ausschnitts XXXVI in Fig. 32,
- Fig. 37: eine Seitenansicht der Feder,
- Fig. 38: eine Seitenansicht in Richtung des Pfeils XXXVIII in Fig. 37.

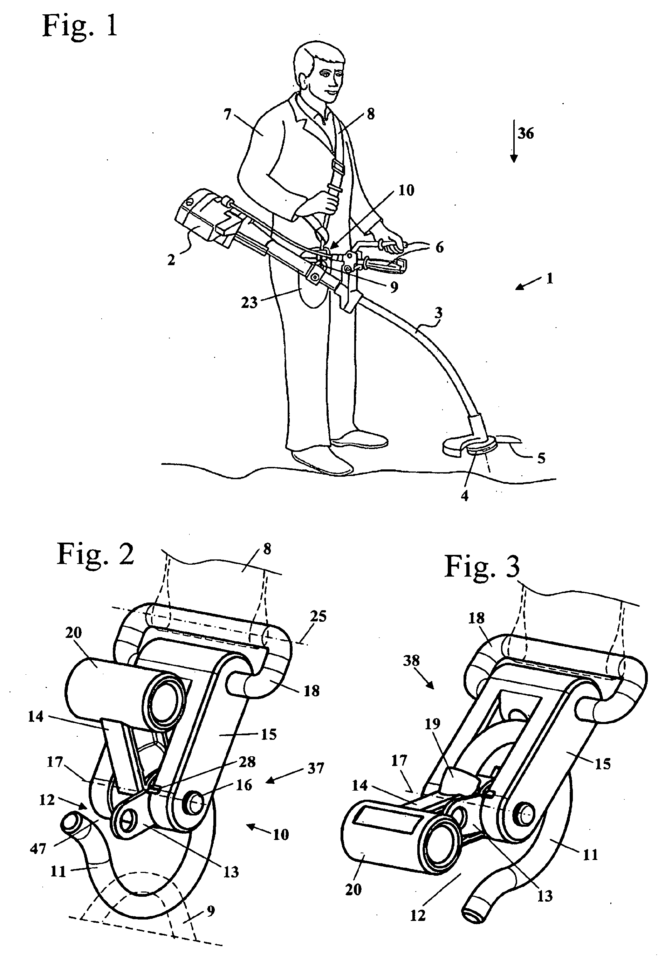

Fig. 1 zeigt als Ausführungsbeispiel für ein an einer Traganordnung getragenes Arbeitsgerät einen Freischneider 1. Der Freischneider 1 besitzt ein Gehäuse 2, in dem ein nicht gezeigter Antriebsmotor angeordnet ist. Der Antriebsmotor ist insbesondere ein Verbrennungsmotor, vorzugsweise ein Einzylinder-Zweitaktmotor. Der Antriebsmotor kann jedoch auch ein Elektromotor sein, wobei zur Energieversorgung vorzugsweise ein Akku dient. Das Gehäuse 2 ist über ein Führungsrohr 3 mit einem Fadenmähkopf 4 verbunden. Der Fadenmähkopf 4 ist rotierend angetrieben und besitzt einen Mähfaden 5, dessen Ende radial nach außen ragt. Der Antrieb erfolgt über eine im Führungsrohr 3 drehbar gelagerte Antriebswelle. Es kann jedoch auch vorgesehen sein, dass der Antriebsmotor am unteren, dem Gehäuse 2 entfernt liegenden Ende des Führungsrohrs 3 benachbart zum Fadenmähkopf 4 angeordnet ist. Am Führungsrohr 3 sind zwei Handgriffe 6 zum Führen des Freischneiders 1 angeordnet.

Der Freischneider 1 ist an einer Traganordnung angeordnet, die einen Traggurt 8 und eine Befestigungseinrichtung 10 zur Verbindung des Traggurts 8 mit dem Arbeitsgerät 1 umfasst. Die Befestigungseinrichtung 10 greift in eine Öse 9 des Freischneiders 1 ein. Benachbart zur Befestigungseinrichtung 10 ist eine Abstützplatte 23 vorgesehen, die am Traggurt 8 gehalten ist und an der sich der Freischneider 1 am Benutzer 7 abstützt. Der Traggurt 8 ist über eine Schulter des Benutzers 7, und zwar die dem Freischneider 1 abgewandte Schulter geführt. Statt des Traggurts 8 kann auch eine Gurtanordnung mit mehreren Gurten vorgesehen sein.

Fig. 2 zeigt die Befestigungseinrichtung 10 im Einzelnen, wobei der Traggurt 8 und die Öse 9 gestrichelt gezeichnet sind. In Fig. 2 ist die Befestigungseinrichtung 10 in geschlossener Stellung, also in Befestigungsstellung 37 gezeigt, in der die Öse 9 in einen Haken 11 der Befestigungseinrichtung 10 eingehakt ist. Der Haken 11 besitzt eine Eintrittsöffnung 12, die in der in Fig. 3 gezeigten Befestigungsstellung 37 der Befestigungseinrichtung 10 weitgehend von einem Sicherungselement 13 verschlossen ist. Das Sicherungselement 13 ist fest mit einem Lagerelement 15 verbunden. Das Lagerelement 15 ist etwa U-förmig ausgebildet und im Bereich des Bodens des Us über einen Befestigungsbügel 18 mit dem Traggurt 8 verbunden. Der Befestigungsbügel 8 ist fest am Lagerelement 15 gehalten. Es kann jedoch auch vorgesehen sein, dass der Befestigungsbügel 18 schwenkbar am Lagerelement 15 gelagert ist. Der Traggurt 8 ist durch den Befestigungsbügel 18 durchgeschlauft, so dass der Befestigungsbügel 18 am Traggurt 8 schwenkbar gelagert ist, und zwar um eine Schwenkachse 25. Die beiden Schenkel des U-förmigen Lagerelements 15 sind über einen Bolzen 16 verbunden, an dem der Haken 11 um eine Schwenkachse 17 schwenkbar gelagert ist. Der Haken 11 ist fest mit einem Betätigungshebel 14 verbunden, der in der in Fig. 2 gezeigten Stellung der Befestigungseinrichtung 10 schräg nach oben und vom Benutzer 7 weg ragt. Der Betätigungshebel 14 ist zwischen den beiden Schenkeln des von dem Lagerelement 15 gebildeten Us gelagert. Am freien Ende des Betätigungshebels 14 ist ein Betätigungsabschnitt 20 angeordnet, der im Ausführungsbeispiel als quer zur Längsrichtung des Betätigungshebels 14 liegender Zylinder ausgebildet ist. In Fig. 2 ist ein erstes Federende 28 einer Torsionsfeder gezeigt, die innerhalb des Betätigungshebels 14 angeordnet ist und die den Betätigungshebel 14 in Richtung auf die Befestigungsstellung 37 der Befestigungseinrichtung 10 federt.

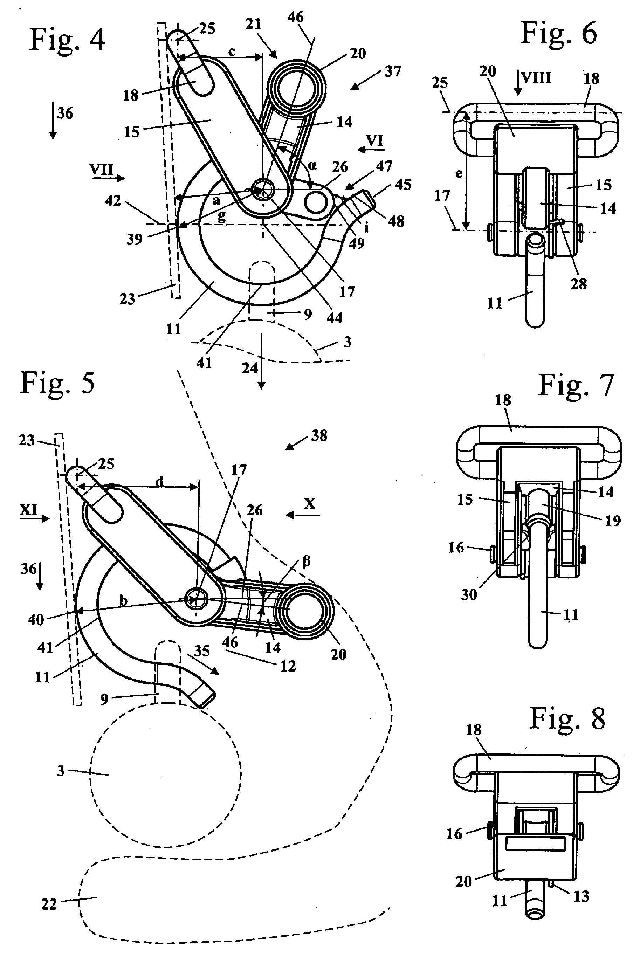

Fig. 3 zeigt die Befestigungseinrichtung 10 in einer Lösestellung 38, in der die Öse 9 aus dem Haken 11 gerutscht ist. Wie Fig. 3 zeigt, besitzt der Betätigungshebel 14 eine Aufnahme 19, in der ein Ende des Hakens 11 gehalten ist. Das andere, freie Ende 45 des Hakens 11 (Fig. 4) begrenzt die Eintrittsöffnung 12. In der in Fig. 3 gezeigten Lösestellung 38 ist die Eintrittsöffnung 12 von dem Sicherungselement 13 weggeschwenkt, das in dieser Stellung annähernd deckungsgleich zum Betätigungshebel 14 liegt. Dadurch ist die Eintrittsöffnung 12 frei zugänglich.

Im Ausführungsbeispiel ist das Sicherungselement 13 elastisch ausgebildet, so dass die Öse 9 in Befestigungsstellung 37 in den Haken 11 eingefädelt werden kann. Wie die Fig. 2 und 4 zeigen, ist zwischen Sicherungselement 13 und dem Haken 11 im Bereich des freien Endes des Sicherungselements 13 ein Einführbereich 47 gebildet, der in Richtung auf das Hakeninnere zuläuft. Der Einführbereich 47 ist in der in Fig. 4 gezeigten Seitenansicht etwa keil- oder trichterförmig ausgebildet. Eine den Einführbereich begrenzende Seitenwand 48 ist am Haken 11 ausgebildet und eine weitere, gegenüberliegende Seitenwand 49 am Sicherungselement 13. Die Seitenwände 48 und 49 besitzen einen Abstand i zueinander, der sich in Richtung auf das Innere des Hakens 11 verkleinert. Die Seitenwände 48, 49 des Trichters verlaufen dabei im Ausführungsbeispiel gebogen. Auch ein gerader Verlauf der Seitenwände 48, 49 kann vorgesehen sein. Wird die Öse 9 im Einführbereich 47 aufgesetzt, so leiten die Seitenwände 48, 49 des Einführbereichs 47, die durch den Haken 11 und das Sicherungselement 13 gebildet werden, die Öse 9 zur Eintrittsöffnung 12 in Richtung auf das Hakeninnere. Dadurch wird das Einfädeln der Öse in den Haken 11 erleichtert. Beim Durchtritt der Öse 9 durch die Eintrittsöffnung 12 wird das Sicherungselement 13 elastisch verformt. Es kann jedoch auch vorgesehen sein, dass das Sicherungselement 13 bei den im üblichen Betrieb auftretenden Kräften starr ist, so dass der Betätigungshebel 14 auch zum Einfädeln der Öse 9 in den Haken 11 betätigt und die Eintrittsöffnung 12 von dem Sicherungselement 13 weggeschwenkt werden muss.

Fig. 4 zeigt die Gestaltung der Befestigungseinrichtung 10 in Befestigungsstellung 37 im Einzelnen. Der Betätigungshebel 14 ragt von der Abstützplatte 23 weg und bezogen auf die Wirkrichtung 36 der Schwerkraft, die auch in Fig. 1 schematisch eingezeichnet ist, schräg nach oben. Die Schwenkachse 17 von Betätigungshebel 14 und Haken 11 besitzt in horizontaler Richtung einen Abstand c zur Schwenkachse 25 des Befestigungsbügels 18. Zur Abstützplatte 23 besitzt die Schwenkachse 17 einen senkrecht zur Ebene der Abstützplatte 23 gemessenen Abstand a. Der Haken 11 und der Befestigungsbügel 18 liegen an der Abstützplatte 23 an. Der Haken 11 stützt sich an einem Abstützpunkt 39 an der Abstützplatte 23 ab. Der Abstützpunkt 39 muss keine punktförmige Gestalt haben, sondern kann linien- oder flächenförmig ausgebildet sein. Der Haken 11 ist bis auf den an sein freies Ende 45 anschließenden Bereich kreisförmig ausgebildet. Der von dem Haken 11 gebildete Kreis besitzt einen Kreismittelpunkt 44, durch den eine gedachte horizontale Ebene 42 geht. Die Schwenkachse 17 liegt oberhalb dieser gedachten Ebene, wobei der Abstand der gedachten Ebene 42 zur Schwenkachse 17 vorteilhaft etwa ein Fünftel bis etwa ein Drittel des Durchmessers des von dem Haken 11 gebildeten Kreises beträgt. Am Haken 11 ist das Arbeitsgerät 1 mit der Öse 9 eingehakt. Die Öse 9 liegt an einer Auflagestelle 41 an der Innenkontur des Hakens 11 an. Die Gewichtskraft 24 des Freischneiders 1 wirkt, wie Fig. 4 zeigt, in Wirkrichtung 36 der Schwerkraft. Aufgrund der exzentrischen Lagerung des Hakens 11 wirkt die Gewichtskraft 24 des Freischneiders 1 einer Verstellung in Lösestellung 38 zusätzlich entgegen. Beim Öffnen des Hakens 11 verringert sich der Abstand zwischen Schwenkachse 17 und Öse 9, wobei der Freischneider 1 angehoben wird. Dadurch wird ein unbeabsichtigtes Öffnen der Befestigungseinrichtung 10 verhindert.

Wie Fig. 5 zeigt, ist die Schwenkachse 17 in Lösestellung 38 weiter oben und in einem größeren Abstand b zur Abstützplatte 23 angeordnet. Die Schwenkachse 17 besitzt in horizontaler Richtung einen Abstand d zur Schwenkachse 25, der größer als der Abstand c in Befestigungsstellung 37 ist. Wie Fig. 5 auch zeigt, stützt sich der Haken 11 an einem Abstützpunkt 40 an der Abstützplatte 23 ab. Ausgehend von der Auflagestelle 41 der Öse 9 in Befestigungsstellung 37 fällt die Innenkontur des Hakens 11 in Lösestellung 38 kontinuierlich ab. Dadurch rutscht die Öse 9, wie durch den Pfeil 35 angedeutet, in Lösestellung 38 aus dem Haken 11 und tritt über die Eintrittsöffnung 12, die vom Sicherungselement 13 freigegeben ist, aus dem Haken 11 aus.

Der Betätigungshebel 14 besitzt eine Mittelachse 46. In Befestigungsstellung 37 (Fig. 4) schließt die Mittelachse 46 mit der Horizontalen 26 einen Winkel α ein, der im Ausführungsbeispiel weniger als 90° beträgt. Zum Verstellen der Befestigungseinrichtung 10 von der Befestigungsstellung 37 in die Lösestellung 38 muss der Betätigungshebel 14 in einer Betätigungsrichtung 21 schräg nach unten und außen verschwenkt werden. In Lösestellung 38 liegt die Mittelachse 46 des Betätigungshebels 14 unterhalb der Horizontalen 46 und schließt mit dieser einen Winkel β ein. Der gesamte Verschwenkwinkel, also die Summe aus den Winkeln α und β, beträgt vorteilhaft etwa 60° bis etwa 120°, insbesondere etwa 80° bis etwa 100°.

Wie Fig. 5 schematisch zeigt, kann der Bediener den Betätigungshebel 14 mit einer Hand 22 betätigen. Dabei liegt der Handballen des Bedieners vorteilhaft im Bereich des Betätigungsabschnitts 20 an. Die Finger des Bedieners kommen dadurch unterhalb der Eintrittsöffnung 12 zu liegen, so dass der Bediener das Führungsrohr 3 auffangen kann, wenn die Öse 9 aus dem Haken 11 rutscht. Wie insbesondere Fig. 5 zeigt, ist die Eintrittsöffnung 12 unmittelbar benachbart zum Betätigungshebel 14 angeordnet. Dadurch wird sichergestellt, dass die Hand 22 des Benutzers 7 in Lösestellung 38, also wenn der Benutzer 7 den Betätigungshebel 14 nach unten drückt, unmittelbar benachbart zur Eintrittsöffnung 12 angeordnet ist, so dass der Freischneider 1 vom Benutzer 7 aufgefangen werden kann.

Wie Fig. 6 zeigt, besitzen die Schwenkachsen 17 und 25 in Befestigungsstellung 37 einen Abstand e zueinander. Die beiden Schenkel des von dem Lagerelement 15 gebildeten Us umgreifen den Betätigungshebel 14.

Wie Fig. 7 zeigt, liegt die Aufnahme 19 für den Haken 11 in Befestigungsstellung 37 an einem Anschlag 30 an, der einteilig mit dem Lagerelement 15 ausgebildet ist und der sich zwischen den beiden Schenkeln des Lagerelements 15 erstreckt. Die Feder, die die Befestigungseinrichtung 10 in Richtung auf die Befestigungsstellung 37 drückt, drückt die Aufnahme 19 gegen den Anschlag 30.

Fig. 8 zeigt die Anordnung des Hakens 11 und des Sicherungselements 13. Die beiden Elemente sind seitlich zueinander versetzt angeordnet.

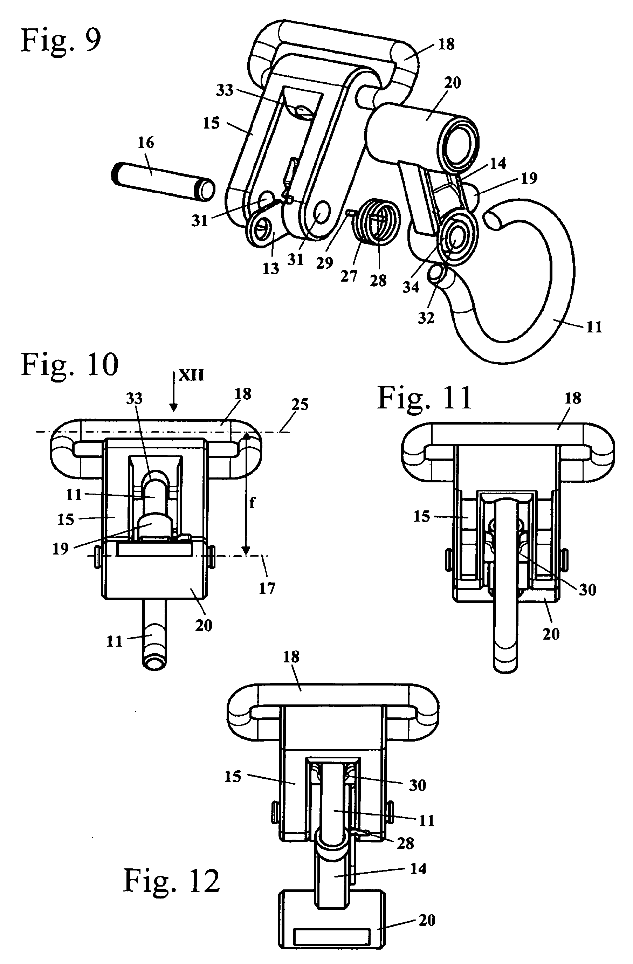

Wie die Explosionsdarstellung in Fig. 9 zeigt, dient eine Feder 27 zur Federung 11 des Betätigungshebels 14 und des Hakens 11. Die Feder 27 ist als Torsionsfeder, und zwar als Schraubenfeder ausgebildet und besitzt das erste Federende 28, das sich am Lagerelement 15 abstützt, sowie ein zweites Federende 29, das fest am Betätigungshebel 14 gehalten ist. Der Betätigungshebel 14 besitzt eine Öffnung 32 für den Bolzen 16. Die Öffnung 32 ist von einer kreisringförmigen Aufnahme 34 umgeben, in der die Feder 27 angeordnet ist. Wie Fig. 9 auch zeigt, besitzen die beiden Schenkel des Lagerelements 15 Öffnungen 31 für den Bolzen 16.

Die Fig. 10 bis 12 zeigen die Befestigungseinrichtung 10 in der auch in Fig. 5 gezeigten Lösestellung 38. In dieser Stellung besitzen die beiden Schwenkachsen 17 und 25 in vertikaler Richtung einen Abstand f zueinander, der kleiner als der Abstand e in Befestigungsstellung 37 ist (Fig. 6). Die Aufnahme 19 hat sich von dem in Fig. 11 gezeigten Anschlag 30 wegbewegt. Im Bereich des Bodens des von dem Lagerelement 15 gebildeten Us ist der Haken 11 in einer Führung 33 am Lagerelement 15 geführt. Fig. 12 zeigt auch die Abstützung des ersten Federendes 28 am Lagerelement 15.

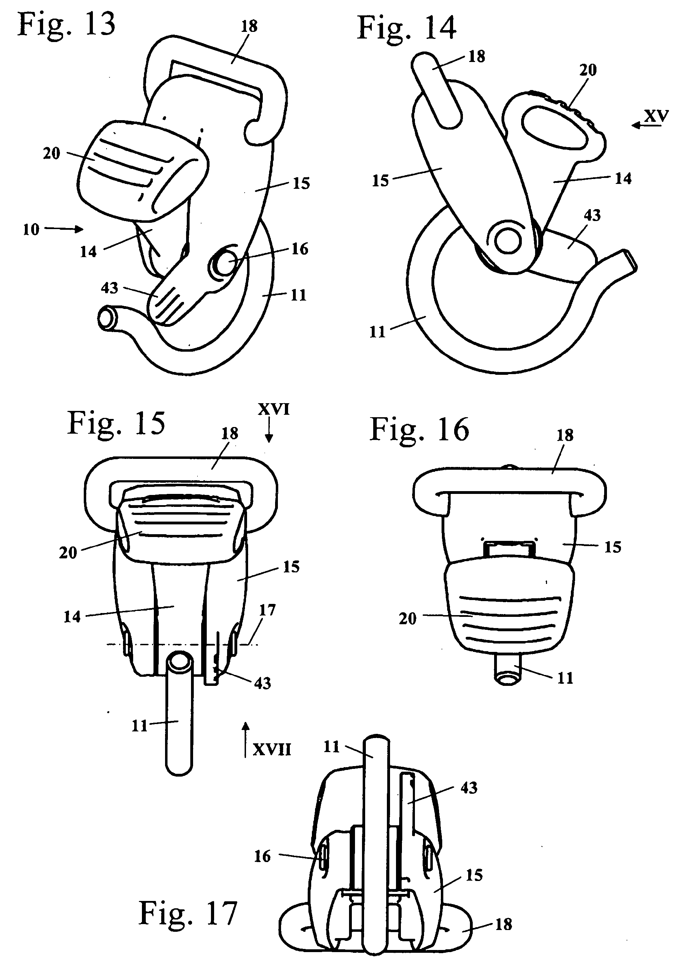

Die Fig. 13 bis 17 zeigen ein Ausführungsbeispiel für die Befestigungseinrichtung 10, das der in den Fig. 2 bis 12 gezeigten Gestaltung weitgehend entspricht. Gleiche Bezugszeichen bezeichnen in allen Figuren einander entsprechende Elemente. Bei dem in Fig. 17 gezeigten Ausführungsbeispiel ist das Sicherungselement 43 nicht als separates Element gestaltet, sondern einteilig am Lagerelement 15 angeformt. Dadurch ergibt sich ein vereinfachter Aufbau mit verringerter Anzahl von Einzelteilen. Das Sicherungselement 43 ist dabei vorteilhaft elastisch ausgebildet, beispielsweise durch die Ausbildung aus ausreichend flexiblem Kunststoff.

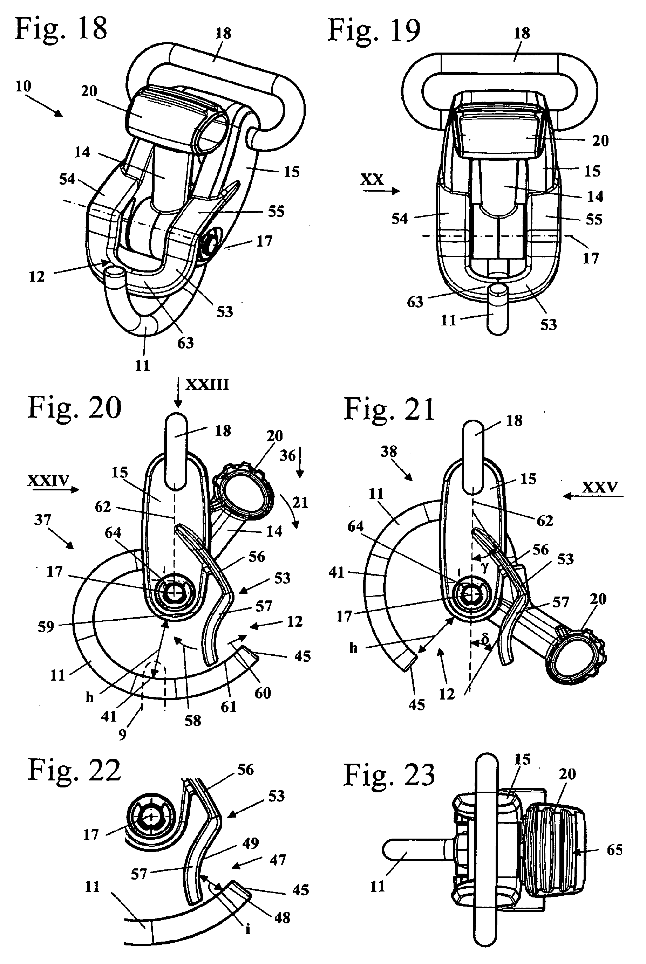

Ein weiteres Ausführungsbeispiel der Befestigungseinrichtung 10 ist in den Figuren 18 bis 37 gezeigt. Gleiche Bezugszeichen wie in den vorangegangenen Figuren kennzeichnen dabei entsprechende Elemente. Die in Fig. 18 gezeigte Befestigungseinrichtung 10 besitzt ein Sicherungselement 53, das am Lagerelement 15 angeformt ist. Das Sicherungselement 53 ist dabei etwa in einem mittigen Bereich des Lagerelements 15 zwischen dem Befestigungsbereich des Befestigungsbügels 18 und der Schwenkachse 17 angebunden. Das Sicherungselement 53 ist etwa U-förmig ausgebildet und besitzt zwei Schenkel 54 und 55. Die beiden Schenkel 54, 55 des Sicherungselements 53 sind jeweils an einem Schenkel des Lagerelements 15 festgelegt. Die beiden Schenkel 54 und 55 des Sicherungselements 53 verlaufen, wie insbesondere die Figuren 20 und 21 zeigen, abgeknickt. Die Schenkel 54 und 55 besitzen einen ersten Abschnitt 56, der zur Verbindungslinie 62 von Befestigungsbügel 18 und Schwenkachse 17 geneigt verläuft. Die Schenkel 54 und 55 besitzen außerdem einen zweiten Abschnitt 57, der zu der Verbindungslinie 62 in Gegenrichtung geneigt ist. In dem Bereich, in dem die beiden Abschnitte 56 und 57 miteinander verbunden sind, ist der erste Abschnitt 56 um einen Winkel γ zur Verbindungslinie 62 geneigt, der bezogen auf die Wirkrichtung der Schwerkraft 36 nach unten öffnet. Der zweite Abschnitt 57 ist in diesem Bereich um einen Winkel δ zur Verbindungslinie 62 geneigt, der im Ausführungsbeispiel größer als der Winkel γ ist und der entgegen der Wirkrichtung 36 der Schwerkraft, also bei üblicher Ausrichtung der Anordnung nach oben, öffnet. Die Verbindungslinie 62 ist dabei in einer Seitenansicht eingezeichnet, in der die Blickrichtung parallel zur Schwenkachse 17 verläuft. Der zweite Abschnitt 57 ist im Bereich der Eintrittsöffnung 12 angeordnet. Der zweite Abschnitt 57 verschließt die Eintrittsöffnung 12 derart, dass die Öse 9 bei geschlossenem Haken 11 nicht ungehindert aus dem Haken 11 herausrutschen kann. Wie die Figuren 18 und 19 zeigen, werden die beiden Schenkel 54 und 55 von einem Verbindungsbereich 63 verbunden, der den Boden des U bildet. Der Verbindungsbereich 63 verschließt die Eintrittsöffnung 12, die zwischen dem Haken 11 und dem Betätigungshebel 14 gebildet ist, mindestens teilweise, so dass ein Herausrutschen der Öse 9 aus dem Haken 11 verhindert ist.

Wie Fig. 22 in vergrößerter Darstellung zeigt, ist zwischen dem zweiten Abschnitt 57 und dem freien Ende 45 des Hakens 11 ein Einführbereich 47 gebildet, der etwa trichterförmig zuläuft. Der trichterförmige Verlauf ergibt sich aufgrund der Abwinkelung des zweiten Abschnitts 57 des Sicherungselements 53 gegenüber dem ersten Abschnitt 56. Der Einführbereich 47 wird durch eine am Haken 11 gebildete Seitenwand 48 und eine am Sicherungselement 53 gebildete Seitenwand 49 gebildet, die einen Abstand i zueinander besitzen. Der Abstand i verkleinert sich zum Hakeninneren hin. Der Einführbereich 47 dient als Einfädelhilfe für die Öse 9. Das Sicherungselement 53 und der Haken 11 sind so geformt, dass der Bediener die Öse 9 im Einführbereich 47 am Sicherungselement 53 oder am Haken 11 aufsetzen kann und die Öse 9 aufgrund der Geometrie des Einführbereichs 47 in Richtung zum Hakeninneren geführt wird. Dadurch wird das Einhängen der Öse 9 erleichtert, und aufgrund der definierten Position der Öse 9 beim Einhängen können geringe Bedienkräfte zum Einhängen der Öse 9 sichergestellt werden.

Fig. 20 zeigt die Befestigungseinrichtung 10 in Befestigungsstellung 37. In dieser Stellung ist die Eintrittsöffnung 12 vom Sicherungselement 53 im Wesentlichen verschlossen. Die in Fig. 20 schematisch eingezeichnete Öse 9 liegt im Bereich einer Auflagestelle 41 auf. Der Haken 11 besitzt an der Auflagestelle 41 einen Abstand h zum Lagerelement 15. Wird der Betätigungshebel 14 durch Herunterdrücken des Betätigungsabschnitts 20 in Betätigungsrichtung 21 verschwenkt, so schwenkt der Haken 11 nach oben, und die Öse 9 rutscht vom Haken 11 herunter. Fig. 21 zeigt die Befestigungseinrichtung 10 in Lösestellung 38. Der Abstand h zwischen dem Haken 11 und dem Lagerelement 15 bleibt in dem Bereich, in dem die Öse 9 aufliegt, während des Verschwenkens des Hakens 11 aus der Befestigungsstellung 37 in die Lösestellung 38 näherungsweise gleich oder vergrößert sich geringfügig, wie die Figuren 20 und 21 zeigen. Dies wird dadurch erreicht, dass der Haken 11 im Bereich zwischen der Auflagestelle 41 und dem freien Ende 45 kreisförmig verläuft, wobei der Kreismittelpunkt 64 benachbart zur Schwenkachse 17 liegt. Durch den gezeigten geringfügigen Versatz des Kreismittelpunkts 64 zur Schwenkachse 17 wird erreicht, dass sich der Abstand h beim Verschwenken des Hakens 11 aus der Befestigungsstellung 37 in die Lösestellung 38 geringfügig vergrößert.

Wie Fig. 23 zeigt, besitzt der Betätigungsabschnitt 20 ein Profil 65, das das Betätigen des Betätigungsabschnitts 20 erleichtert. Das Profil 65 erhöht die Reibung am Betätigungsabschnitt 20.

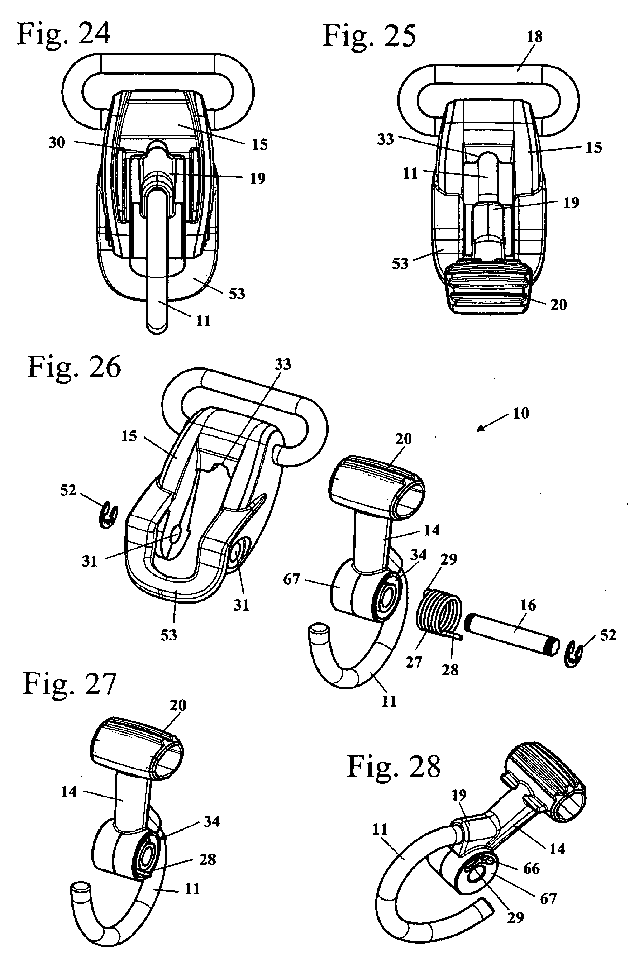

Wie Fig. 24 und Fig. 25 zeigen, ist am Lagerelement 15 ein Anschlag 30 für die Aufnahme 19 des Hakens 11 ausgebildet. Wie Fig. 24 und Fig. 25 zeigen, bildet das Lagerelement 15 benachbart zum Anschlag 30 eine Führung 33 für den Haken 11.

Fig. 26 zeigt den Aufbau der Befestigungseinrichtung 10 im Einzelnen. Der Betätigungshebel 14 ist mit dem Haken 11 fest verbunden. Der Betätigungshebel 14 besitzt eine Aufnahme 34 für die Feder 27, die als Schraubenfeder, nämlich als Torsionsfeder ausgebildet ist. Zur Sicherung der Lage des Bolzens 16 in den Öffnungen 31 im Lagerelement 15 sind Sicherungsringe 52 an beiden Enden des Bolzens 16 vorgesehen.

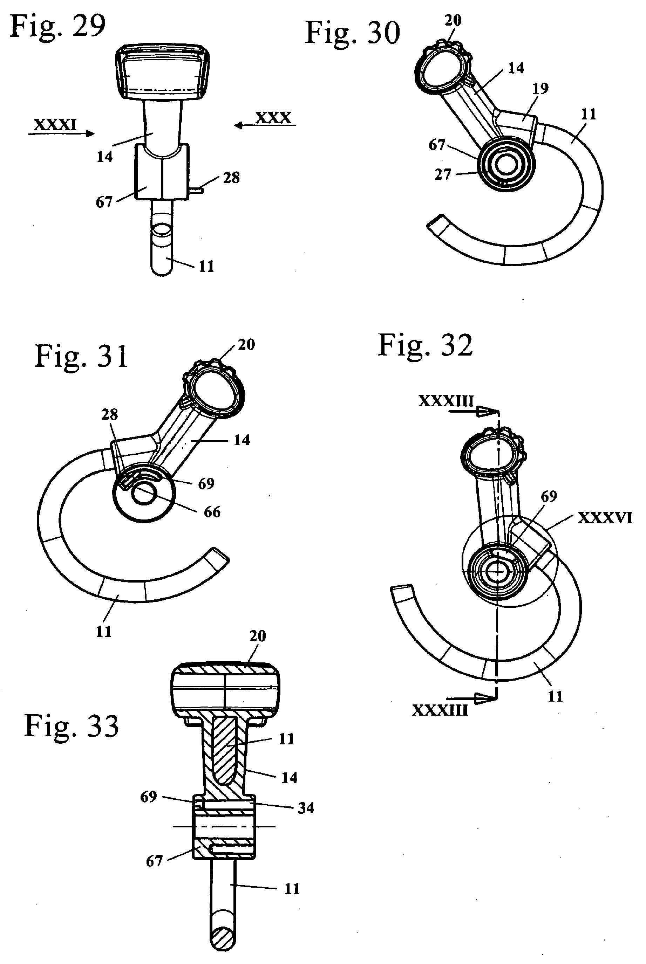

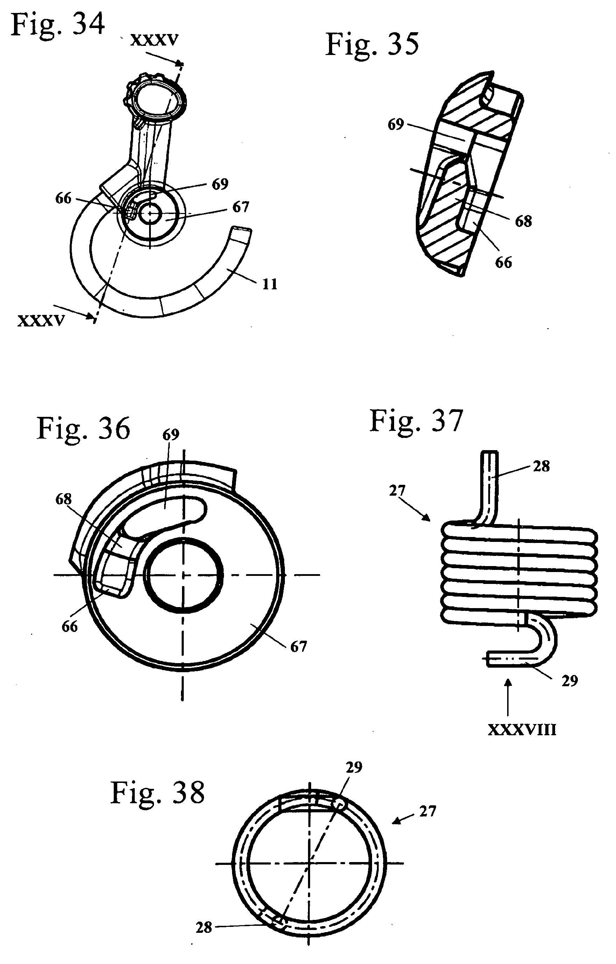

Die Figuren 27 bis 31 zeigen die Anordnung der Feder 27 in der Aufnahme 34. Nur das gerade Federende 28, das mit dem Lagerelement 15 in Verbindung steht, steht aus der Aufnahme 34 hervor. Das zweite Federende 29 ist in einer Vertiefung 66 am Betätigungshebel 14, und zwar an einem Lagerabschnitt 67 des Betätigungshebels 14, angeordnet. Wie Fig. 29 zeigt, steht das zweite Federende 29 nicht über den Lagerabschnitt 67 hinaus. Die Gestaltung des zweiten Federendes 29 ist in Fig. 37 gezeigt. Das zweite Federende 29 ist etwa U-förmig abgebogen ausgebildet. Zur Montage der Feder 27 am Lagerabschnitt 67 ist im Bereich der Vertiefung 66 eine Montageöffnung 69 vorgesehen, die das Hindurchstecken des zweiten Federendes 29 von der Seite, an der in fertig montiertem Zustand das erste Federende 28 angeordnet ist, erlaubt. Die Montageöffnung 69 ist in den Figuren 31 bis 36 gezeigt. Wie insbesondere die Figuren 35 und 36 zeigen, ist benachbart zur Montageöffnung 69 ein Haltesteg 68 angeordnet, an dem das zweite Federende 29 eingehakt wird. Das zweite Federende 29 ist in vollständig montiertem Zustand innerhalb der Vertiefung 66 angeordnet und steht nicht über die Stirnseite des Lagerabschnitts 67 hinaus. Wie in Fig. 26 gezeigt, ist die Feder 27 außerdem so gewickelt, dass sie sich beim Verschwenken des Betätigungshebels 14 in Betätigungsrichtung 21 (Fig. 20) zusammenzieht. Durch die Anordnung der Feder 27 vollständig im Lagerabschnitt 67 kann vermieden werden, dass die Feder 27 beim Betätigen in den zwischen dem Lagerabschnitt 67 und dem Lagerelement 15 gebildeten Spalt gelangen und sich so verklemmen kann.

Wie Fig. 33 zeigt, erstreckt sich der Haken 11 bis in den Betätigungshebel 14 und verstärkt diesen. Dadurch wird eine erhöhte Stabilität des Betätigungshebels 14 erreicht. Es kann jedoch auch vorgesehen sein, dass der Haken 11 im Bereich der Aufnahme 19 endet.

## Patentansprüche

1. Anordnung aus Arbeitsgerät und Traganordnung, wobei die Traganordnung einen Traggurt (8) und eine lösbare Befestigungseinrichtung (10) zur Befestigung des Arbeitsgeräts an dem Traggurt (8) besitzt, die mittels einer Betätigungseinrichtung aus einer Befestigungsstellung (37) in eine Lösestellung (38) verstellbar ist, wobei die Befestigungseinrichtung (10) einen schwenkbaren Haken (11) besitzt, der in Befestigungsstellung (37) in einer Öse (9) eingehakt ist und das Arbeitsgerät an der Traganordnung hält,
**dadurch gekennzeichnet, dass** die Anordnung dazu vorgesehen ist, dass bei an einem Benutzer (7) angeordneter Traganordnung und an der Traganordnung festgelegtem Arbeitsgerät beim Verstellen der Befestigungseinrichtung (10) aus der Befestigungsstellung (37) in die Lösestellung (38) der Haken (11) so verschwenkt werden kann, dass die Öse (9) aufgrund der Gewichtskraft (24) des Arbeitsgerätes aus dem Haken (11) gleitet und wobei die Traganordnung eine Abstützplatte (23) umfasst, und dass der Haken (11) sich in horizontaler Richtung an der Abstützplatte (23) an einem Abstützpunkt (39, 40) abstützt, wobei der Abstand (g, b) des Abstützpunktes (39, 40) zur Schwenkachse (17) in Lösestellung (38) größer als in Befestigungsstellung (37) der Befestigungseinrichtung (10) ist.

2. Anordnung nach Anspruch 1,
**dadurch gekennzeichnet, dass** der Haken (11) an dem Traggurt (8) festgelegt ist und die Öse (9) an dem Arbeitsgerät.

3. Anordnung nach Anspruch 2,
**dadurch gekennzeichnet, dass** die Innenkontur des Hakens (11), auf der die Öse (9) aufliegt, in Lösestellung (38) der Befestigungseinrichtung (10) von einer Auflagestelle (41), auf der die Öse (9) in Befestigungsstellung (37) aufliegt, bis zu einer Eintrittsöffnung (12) des Hakens (11) abfällt.

4. Anordnung nach einem der Ansprüche 1 bis 3,
**dadurch gekennzeichnet, dass** der Haken (11) in Richtung auf die Befestigungsstellung (37) der Befestigungseinrichtung (10) gefedert gelagert ist.

5. Anordnung nach Anspruch 4,
**dadurch gekennzeichnet, dass** die Befestigungseinrichtung (10) einen Anschlag (30) besitzt, der die Drehlage des Hakens (11) in Befestigungsstellung (37) festlegt.

6. Anordnung nach einem der Ansprüche 1 bis 5,
**dadurch gekennzeichnet, dass** die Betätigungseinrichtung in Befestigungsstellung (38) bezogen auf die Wirkrichtung (36) der Schwerkraft oberhalb des Hakens (11) angeordnet ist.

7. Anordnung nach einem der Ansprüche 1 bis 6,
**dadurch gekennzeichnet, dass** der Haken (11) eine Eintrittsöffnung (12) besitzt, durch die die Öse (9) in den Haken (11) eingehakt werden kann.

8. Anordnung nach Anspruch 7,
**dadurch gekennzeichnet, dass** die Eintrittsöffnung (12) und die Betätigungseinrichtung benachbart zueinander angeordnet sind.

9. Anordnung nach einem der Ansprüche 1 bis 8,
**dadurch gekennzeichnet, dass** die Befestigungseinrichtung (10) ein Lagerelement (15) besitzt, an dem der Haken (11) drehbar gelagert ist.

10. Anordnung nach Anspruch 9,
**dadurch gekennzeichnet, dass** der Haken (11) und ein Betätigungselement fest miteinander verbunden sind und gegenüber dem Lagerelement (15) beweglich gelagert sind.

11. Anordnung nach Anspruch 9 oder 10,
**dadurch gekennzeichnet, dass** die Befestigungseinrichtung (10) ein Sicherungselement (13, 43, 53) besitzt, das fest mit dem Lagerelement (15) verbunden ist und die Eintrittsöffnung (12) in den Haken (11) in Befestigungsstellung (37) mindestens teilweise verschließt und in Lösestellung (38) freigibt.

12. Anordnung nach Anspruch 11,
**dadurch gekennzeichnet, dass** das Sicherungselement (13, 43, 53) elastisch ist, wobei die Bewegung des Sicherungselements (53) insbesondere in mindestens einer Bewegungsrichtung von einem Anschlag (59, 61) begrenzt ist.

13. Anordnung nach Anspruch 11 oder 12,
**dadurch gekennzeichnet, dass** zwischen Haken (11) und Sicherungselement (13, 43, 53) ein Einführbereich (47) gebildet ist, dessen Breite (i) sich in Richtung auf das Innere des Hakens (11) verkleinert.

## Claims

1. Assembly comprising a working implement and a carrying arrangement, wherein the carrying arrangement comprises a carrying belt (8) and a releasable fastening device (10) for securing the working implement to the carrying belt (8), which fastening device (10) can be moved from a fastening position (37) into a release position (38) by means of an operating device, wherein the fastening device (10) has a pivotable hook (11), which is hooked into an eye (9) in the fastening position (37) and secures the working implement to the carrying arrangement,
**characterised in that** the assembly is provided for allowing the hook (11), when the carrying arrangement is worn by a user (7) and the fastening device (10) is moved from the fastening position (37) into the release position (38), to be pivoted in such a way that the eye (9) slides out of the hook (11) owing to the weight (24) of the working implement, and **in that** the carrying arrangement comprises a support plate (23), and **in that** the hook (11) is supported on a support point (39, 40) in the horizontal direction of the support plate (23), the distance (g, b) of the support point (39, 40) from the pivot axis (17) being greater in the release position (38) than in the fastening position (37) of the fastening device (10).

2. Assembly according to claim 1,
**characterised in that** the hook (11) is located on the carrying belt (8) and the eye (9) is located on the working implement.

3. Assembly according to claim 2,
**characterised in that** the internal contour of the hook (11) on which the eye (9) rests drops in the release position (38) of the fastening device (10) from a contact point (41), on which the eye (9) lies in the fastening position (37), to an entry opening (12) of the hook (11).

4. Assembly according to any of claims 1 to 3,
**characterised in that** the hook (11) is spring-loaded towards the fastening position (37) of the fastening device (10).

5. Assembly according to claim 4,
**characterised in that** the fastening device (10) has a stop (30), which determines the rotary position of the hook (11) in the fastening position (37).

6. Assembly according to any of claims 1 to 5,
**characterised in that** the operating device is located above the hook (11) relative to the acting direction (36) of the force of gravity in the fastening position (37).

7. Assembly according to any of claims 1 to 6,
**characterised in that** the hook (11) has an entry opening (12), through which the eye (9) can be hooked into the hook (11).

8. Assembly according to claim 7,
**characterised in that** the entry opening (12) and the operating device are arranged adjacent to one another.

9. Assembly according to any of claims 1 to 8,
**characterised in that** the fastening device (10) comprises a bearing element (15), on which the hook (11) is rotatably mounted.

10. Assembly according to claim 9,
**characterised in that** the hook (11) and an operating element are permanently joined to one another and mounted movably relative to the bearing element (15).

11. Assembly according to claim 9 or 10,
**characterised in that** the fastening device (10) comprises a securing element (13, 43, 53), which is permanently joined to the bearing element (15) and at least partially blocks the entry opening (12) into the hook (11) in the fastening position (37) while releasing it in the release position (38).

12. Assembly according to claim 11,
**characterised in that** the securing element (13, 43, 53) is elastic, the movement of the securing element (53) being limited by a stop (59, 61) in at least one direction of movement in particular.

13. Assembly according to claim 11 or 12,
**characterised in that** an insertion region (47), the width (i) of which decreases towards the interior of the hook (11), is formed between the hook (11) and the securing element (13, 43, 53).

## Revendications

1. Ensemble formé d'un outil de travail et d'un dispositif de support, étant précisé que le dispositif de support comporte une courroie de support (8) et un dispositif de fixation amovible (10) qui est destiné à fixer l'outil de travail à la courroie de support (8) et qui est apte à passer d'une position de fixation (37) à une position de détachement (38) à l'aide d'un dispositif d'actionnement, étant précisé que le dispositif de fixation (10) comporte un crochet pivotant (11) qui, dans la position de fixation (37), est accroché dans un oeillet (9) et maintient l'outil de travail sur le dispositif de support,
**caractérisé en ce que** ledit ensemble est prévu pour que lorsque le dispositif de support et disposé sur un utilisateur (7) et que l'outil de travail est fixé au dispositif de support, quand le dispositif de fixation (10) passe de la position de fixation (37) à la position de détachement (38) le crochet (11) peut pivoter de telle sorte que l'oeillet (9) glisse hors du crochet (11) sous l'effet du poids (24) de l'outil de travail, et étant précisé que le dispositif de support comprend une plaque d'appui (23), et **en ce que** le crochet (11) s'appuie dans le sens horizontal contre la plaque d'appui (23) au niveau d'un point d'appui (39, 40), étant précisé que la distance (g, b) entre le point d'appui (39, 40) et l'axe de pivotement (17) est plus grande dans la position de détachement (38) que dans la position de fixation (37).

2. Ensemble selon la revendication 1,
**caractérisé en ce que** le crochet (11) est fixé à la courroie de support (8), et l'oeillet (9) à l'outil de travail.

3. Ensemble selon la revendication 2,
**caractérisé en ce que** dans la position de détachement (38) du dispositif de fixation (10), le contour intérieur du crochet (11) sur lequel l'oeillet (9) est appliqué descend d'un point d'application (41) sur lequel l'oeillet (9) est appliqué dans la position de fixation (37), jusqu'à une ouverture d'entrée (12) du crochet (11).

4. Ensemble selon l'une des revendications 1 à 3,
**caractérisé en ce que** le crochet (11) est monté pour faire ressort en direction de la position de fixation (37) du dispositif de fixation (10).

5. Ensemble selon la revendication 4,
**caractérisé en ce que** le dispositif de fixation (10) comporte une butée (30) qui fixe la position de rotation du crochet (11) dans la position de fixation (37).

6. Ensemble selon l'une des revendications 1 à 5,
**caractérisé en ce que** le dispositif d'actionnement, dans la position de fixation (38), est disposé au-dessus du crochet (11), par rapport au sens d'action (36) de la gravité.

7. Ensemble selon l'une des revendications 1 à 6,
**caractérisé en ce que** le crochet (11) comporte une ouverture d'entrée (12) par laquelle l'oeillet (9) peut être accroché dans le crochet (11).

8. Ensemble selon la revendication 7,
**caractérisé en ce que** l'ouverture d'entrée (12) et le dispositif d'actionnement sont voisins.

9. Ensemble selon l'une des revendications 1 à 8,
**caractérisé en ce que** le dispositif de fixation (10) comporte un élément de montage (15) au niveau duquel le crochet (11) est monté en rotation.

10. Ensemble selon la revendication 9,
**caractérisé en ce que** le crochet (11) et un élément d'actionnement sont reliés solidement entre eux et sont montés mobiles par rapport à l'élément de montage (15).

11. Ensemble selon la revendication 9 ou 10,
**caractérisé en ce que** le dispositif de fixation (10) comporte un élément de sécurité (13, 43, 53) qui est relié solidement à l'élément de montage (15) et qui ferme au moins en partie l'ouverture d'entrée (12) dans le crochet (11), dans la position de fixation (37), et la dégage dans la position de détachement (38).

12. Ensemble selon la revendication 11,
**caractérisé en ce que** l'élément de sécurité (13, 43, 53) est élastique, étant précisé que le déplacement de l'élément de sécurité (53) en particulier dans au moins un sens de déplacement est limité par une butée (59, 61).

13. Ensemble selon la revendication 11 ou 12,
**caractérisé en ce qu'**entre le crochet (11) et l'élément de sécurité (13, 43, 53) est formée une zone d'introduction (47) dont la largeur (i) va en diminuant en direction de l'intérieur du crochet (11).
